# EUROPÄISCHE PATENTSCHRIFT

(11) **EP 0 781 646 B1**
(45) Veröffentlichungstag und Bekanntmachung des Hinweises auf die Patenterteilung: **25.08.2004**
(21) Anmeldenummer: 95120582.2
(22) Anmeldetag: 27.12.1995
(51) Int. Cl.: B32B 5/02, B32B 27/12

(54) **Verfahren zur Herstellung eines Schichtaufbaus sowie damit herstellbares Produkt**
Method for the production of a layer structure and product obtainable by this method
Procédé de manufacture d'une structure laminée et produit ainsi obtenu

(43) Veröffentlichungstag der Anmeldung: 02.07.1997
(73) Patentinhaber: ERA BESCHICHTUNG GmbH & CO. KG, D-31592 Stolzenau (DE)
(72) Erfinder: Herkenhoff, Ulrich, D-49451 Holdorf (DE); Veckenstedt, Peter, Dr., D-33824 Werther/Westf. (DE)
(74) Vertreter: Winkler, Andreas, Dr.

(56) Entgegenhaltungen:
- DE-A- 1 944 439
- DE-A- 2 014 564
- US-A- 3 481 821
- US-A- 4 215 686

## Beschreibung

Die Erfindung betrifft ein Verfahren zur Herstellung eines Schichtaufbaus nach dem Oberbegriff von Anspruch 1, sowie ein danach herstellbares Produkt.

Aus der DE 19 44 439 A ist ein Verfahren zur Herstellung von mit Polyurethanen beschichteten Textilien bekannt, wobei ein dreischieniges Gewirke, das einseitig aufgerauht ist, auf der aufgerauhten Seite mit einem Polyurethan nach dem 1- bzw. dem 2-Strichverfahren beschichtet und anschließend mechanisch genarbt wird.

Aus der US 4,215,686 A ist ein Herstellungsgegenstand bekannt, der einen Poly(ε-caprolacton)-Film umfaßt, der daran ein Poly(ε-caprolacton)-Gewebe aufweist, wobei das Gewebe eine nicht-aufgerauhte Seite und eine aufgerauhte Seite aufweist, wobei die nicht-aufgerauhte Seite an dem Film befestigt ist.

Mehrschichtige Kunststoffbahnen mit mindestens einer Oberflächenschicht und einer sich daran anschließenden druckweichen Unterschicht werden insbesondere zur Herstellung von Ausstattungsteilen für den Innenraum von Kraftfahrzeugen verwendet.

Ein gegenwärtig in weitem Umfang eingesetztes Material ist beispielsweise so aufgebaut, daß auf eine Gewebelage in einer Stärke von ca. 0,4 mm aus z.B. Polyamid eine Lage aus geschäumtem Material, z.B. Polyurethanschaum, in einer Stärke von 3 bis 8 mm aufgebracht wird. Als Oberflächen-schicht wird dann ein z.B. mit PVC beschichtetes Gewirke aus Polyester (PES) (auch bekannt unter dem Namen Kunstleder), Polyamid, Baumwolle oder Baumwolle/PES durch Flamm- oder Klebekaschierung aufgebracht, wobei dieses Gewirke vor oder nach dem Aufkaschieren mit einer Lackschicht versehen und in einer bestimmten Struktur geprägt werden kann.

Ein derartiges Material wird insbesondere in solchen Bereichen des Innenraums von Kraftfahrzeugen eingesetzt, wo eine gewisse Weichheit des Materials erforderlich oder erwünscht ist und/ oder das Durchdrücken von Konstruk-tionsteilen beispielsweise im Sitzbereich verhindert werden soll. Nachteilig bei diesem Material ist, daß die Herstellung in einer Vielzahl von hintereinandergeschalteten Schritten erfolgen muß, was zeit- und kostenintensiv ist.

Der Erfindung liegt daher die Aufgabe zugrunde, das bekannte Verfahren dahingehend weiterzubilden, daß ein qualitativ mit Materialien nach dem Stand der Technik zumindest gleich-wertiges Material unter Vereinfachung der Verfahrensführung hergestellt werden kann.

Erfindungsgemäß wird diese Aufgabe durch die kennzeichnenden Merkmale von Anspruch 1 gelöst.

Dabei ist es besonders vorteilhaft, ein einseitiges aufgebauschtes Gewirke aus im wesentlichen Polyester zu verwenden.

Für die Oberflächenschicht wird vorteilhafterweise ein einoder mehrschichtiges Material aus der Gruppe bestehend aus
PVC, Polyurethanen, Polyolefinen, Styrol-Copolymeren oder deren Abmischungen, verwendet.

Weiterhin schlägt die Erfindung vor, daß die Oberseite der Oberflächenschicht - nach oder vor Verbindung mit dem Kunstfaser-Gewirke -, gegebenenfalls nach Aufbringung eines geeigneten Lackes, einer Strukturprägung unterzogen wird.

Dabei erfolgt die Strukturprägung vorteilhafterweise mittels Heißkalandern.

Desweiteren sieht die Erfindung noch vor, daß auf die Oberseite der Oberflächenschicht zu einem geeigneten Zeitpunkt eine mittels geprägtem Schichtträger erzeugte Dekorschicht aufgebracht wird.

Weiterhin betrifft die Erfindung einen Schichtaufbau, der nach dem erfindungsgemäßen Verfahren hergestellt ist.

Dabei ist es besonders vorteilhaft, wenn das einseitig aufgebauschte Gewirke im wesentlichen aus Polyester besteht. Die Erfindung schlägt vor, daß die Oberflächenschicht insbesondere ein- oder mehrschichtiges Material aus der Gruppe, bestehend aus PVC, Polyurethanen, Polyolefinen, Styrol-Copolymeren oder deren Abmischungen, ist.

In einer besonders vorteilhaften Ausführungsform ist die Oberseite der Oberflächenschicht strukturgeprägt.

Die Erfindung schlägt alternativ vor, daß auf der Oberseite der Oberflächenschicht eine mittels geprägtem Schichtträger erzeugte Dekorschicht angeordnet ist.

Überraschenderweise hat sich herausgestellt, daß die Verwendung eines Gewirkes aus beispielsweise Polyester, das einseitig aufgebauscht ist, die bisher separaten Gewebe- und Schaumlagen ohne Nachteil für die Qualität des Endmaterials ersetzen kann, wodurch in der Herstellung zumindest ein Zwischenschritt eingespart werden kann, was insgesamt zu Zeit- und Kosteneinsparungen führt. Dieses Ergebnis war insbesondere deshalb für den Fachmann überraschend, als nicht vorherzusehen gewesen ist, daß ein derartiges beschichtetes Polyester-Gewirke den bei der Prägung mit Heißkalandern, wie sie üblicherweise in diesem Bereich eingesetzt wird, auftretenden Temperaturen und Drücken widersteht, ohne daß die Schaum- und Bauschstruktur kollabiert.

Besonders bevorzugt kann in diesem Zusammenhang ein neuentwickeltes, aber in diesem Bereich noch nicht eingesetztes Gewirke aus Polyester verwendet werden, das mit einem speziellen eingewirkten Faden hergestellt wird, durch den es ermöglicht wird, das Material einseitig aufzubauschen. Dieses Material ist beschrieben in der (noch nicht veröffentlichten) deutschen Patentanmeldung P 44 43 396.4. Es soll aber ausdrücklich darauf hingewiesen werden, daß auch andere ähnlich aufgebaute Materialien für den erfindungsgemäßen Zweck eingesetzt werden könnten.

Hinsichtlich der Materialzusammensetzung der Oberflächenschicht sei hervorgehoben, daß hierfür nicht nur die im nachfolgenden Beispiel beschriebenen PVC-Materialien, sondern auch weitere Produktgruppen oder -familien aus PVC-freien Materialien einsetzbar sind, wie beispielsweise Polyurethane, Polyolefine und Styrol-Copolymere bzw. dementsprechende Abmischungen.

Die Erfindung wird im weiteren detaillierter anhand des nachfolgenden Herstellungsbeispiels erläutert.

### BEISPIEL

Im sogenannten indirekten Verfahren wird zunächst auf eine entsprechend mit Trennmittel behandelte Papierbahn in einer Streichmaschine ein- oder mehrschichtig eine PVC-Material aufgebracht, wobei sich bei mehrschichtigem Auftrag die Dichten der einzelnen Schichten voneinander unterscheiden können, so daß beispielsweise auf eine kompakte Unterschicht eine geschäumte Schicht aufgebracht werden kann.

Dabei kann die geschäumte Schicht aus einem relativ grobporigen Schaum mit einem speziellen Treibmittel/Kicker-Verhältnis, das auf das Temperaturprofil im nachfolgenden Trockenkanal abgestimmt ist, bestehen. Die Maschinenge-schwindigkeit der Beschichtungsanlage liegt im konkreten Beispiel bei 20 bis 45 m/min.

Nach Durchgang durch einen Trockenkanal wird anschließend eine übliche Kaschiermasse aufgetragen, auf die ein- oder mehrschichtige PVC-Bahn, in die das oben beschriebene einseitig aufgebauschte Polyester-Gewirke eingelegt wird, wobei dies mit der Gewirke-Seite des Polyester-Gewirkes erfolgt. Es ergibt sich ein Material, das auf der Rückseite aufgebauscht ist.

Anschließend wird das Schichtmaterial in einem Trockenkanal ausgeliert und danach vom Papier abgezogen. Bei der Kaschierung wird möglichst ohne Druck locker aufliegend einkaschiert, wobei hierfür ein spezieller Kaschierwinkel von 10 bis 40° gewählt werden kann, um dies zu erreichen. Vorteilhaft hierfür ist auch, wenn die Antriebsgeschwin-digkeit der Kaschierwalze auf die Maschinengeschwindigkeit leicht nachlaufend abgestimmt ist.

Dieser Schichtaufbau kann anschließend mit einem geeigneten Lack bedruckt werden, der das Aufprägen einer Struktur mit z.B. Heißkalandern ermöglicht. Dabei erfolgt die Aufheizung nur auf der zu prägenden Seite, wobei kontinuierlich mehrstufig auf maximal 120°C vorgeheizt wird. Anschließend erfolgt ein kurzzeitiges unmittelbares Aufheizen (z.B. über Strahler) auf eine Prägetemperatur von 170-210°C bei gleichzeitiger rückseitiger Kühlung über wassergekühlte Walzen. Eine im Prägespalt beginnende Kühlung hat den Vorteil, daß Schrumpf- und Schwindungsprozesse weitgehend vermieden und damit eine hohe Narbstabilität erreicht wird. Schließlich ist es vorteilhaft, nicht auf Druck zu fahren, d.h. schonend zu prägen, wobei dies durch Einstellung des Prägespaltes erreicht wird, der von der jeweiligen Materialdicke abhängt und ca. 50 % der Materialdicke entspricht.

Die in der vorstehenden Beschreibung und in den Ansprüchen offenbarten Merkmale der Erfindung können sowohl einzeln, als auch in beliebiger Kombination für die Verwirklichung der Erfindung in ihren verschiedenen Ausführungsformen wesentlich sein.

## Patentansprüche

1. Verfahren zur Herstellung eines Schichtaufbaus mit mindestens einer Oberflächenschicht und einer daran anschließenden druckweichen Unterschicht, wobei als druckweiche Unterschicht ein einseitig aufgebauschtes Kunstfaser-Gewirke verwendet wird, **dadurch gekennzeichnet, daß** auf die Rückseite der Oberflächenschicht eine Kaschiermasse aufgetragen wird, in die das einseitig aufgebauschte Gewirke mit der Gewirke-Seite eingelegt wird.

2. Verfahren nach Anspruch 1, **dadurch gekennzeichnet, daß** ein einseitig aufgebauschtes Gewirke aus im wesentlichen Polyester verwendet wird.

3. Verfahren nach einem der vorangehenden Ansprüche, **dadurch gekennzeichnet, daß** für die Oberflächenschicht ein ein- oder mehrschichtiges Material aus der Gruppe, bestehend aus PVC, Polyurethanen, Poyolefinen, Styrol-Copolymeren oder deren Abmischungen verwendet wird.

4. Verfahren nach einem der vorangehenden Ansprüche, **dadurch gekennzeichnet, daß** die Oberseite der Oberflächenschicht, ggf. nach Aufbringung eines geeigneten Lackes, einer Strukturprägung unterzogen wird.

5. Verfahren nach Anspruch 4, **dadurch gekennzeichnet, daß** die Strukturprägung mittels Heißkalandern erfolgt.

6. Verfahren nach Anspruch 4 oder 5, **dadurch gekennzeichnet, daß** die Oberflächenschicht vor Verbindung mit dem Kunstfaser-Gewirke der Strukturprägung unterzogen wird.

7. Verfahren nach einem der Ansprüche 4 oder 5, **dadurch gekennzeichnet, daß** die Oberflächenschicht nach Verbindung mit dem Kunstfaser-Gewirke der Strukturprägung unterzogen wird.

8. Verfahren nach einem der Ansprüche 1 bis 3, **dadurch gekennzeichnet, daß** auf die Oberseite der Oberflächenschicht zu einem geeigneten Zeitpunkt eine mittels geprägtem Schichtträger erzeugte Dekorschicht aufgebracht wird.

9. Schichtaufbau, der nach einem Verfahren nach einem der Ansprüche 1 bis 8 hergestellt ist.

10. Schichtaufbau nach Anspruch 9, **dadurch gekennzeichnet, daß** das einseitig aufgebauschte Gewirke aus im wesentlichen Polyester besteht.

11. Schichtaufbau nach einem der Ansprüche 9 oder 10, **dadurch gekennzeichnet, daß** die Oberflächenschicht ein ein- oder mehrschichtiges Material aus der Gruppe, bestehend aus PVC, Polyurethanen, Polyolefinen, Styrol-Copolymeren oder deren Abmischungen, ist.

12. Schichtaufbau nach einem der Ansprüche 9 bis 11, **dadurch gekennzeichnet, daß** die Oberseite der Oberflächenschicht strukturgeprägt ist.

13. Schichtaufbau nach einem der Ansprüche 9 bis 11, **dadurch gekennzeichnet, daß** auf der Oberseite der Oberflächenschicht eine geprägte Papierschicht angeordnet ist.

## Claims

1. A process for the production of a laminated structure comprising at least one surface layer and a pressure-soft bottom layer adjoining the same, the pressure-soft bottom layer being in the form of a unilaterally puffed-out synthetic fibre knitted fabric, **characterised in that** a coating substance, into which the unilaterally puffed-out knitted fabric is inserted by the knitted fabric side, is applied to the back of the surface layer.

2. A process according to claim 1, **characterised in that** a unilaterally puffed-out knitted fabric of substantially polyester is used.

3. A process according to any one of the preceding claims, **characterised in that** for the surface layer use is made of a single or multi-layer material from the group consisting of PVC, polyurethanes, polyolefins, styrene-copolymers or mixtures thereof.

4. A process according to any one of the preceding claims, **characterised in that** the upper side of the surface layer is subjected to a structure embossing, after application of a suitable varnish if required.

5. A process according to claim 4, **characterised in that** the structure embossing is effected by means of hot calendering.

6. A process according to claim 4 or 5, **characterised in that** the surface layer is subjected to the structure embossing before being connected to the synthetic fibre knitted fabric.

7. A process according to claim 4 or 5, **characterised in that** the surface layer is subjected to the structure embossing after connection to the synthetic fibre knitted fabric.

8. A process according to any one of claims 1 to 3, **characterised in that** a decorative layer produced by means of an embossed layer support is applied to the upper side of the surface layer at a suitable time.

9. A laminated structure produced by a process according to any one of claims 1 to 8.

10. A laminated structure according to claim 9, **characterised in that** the unilaterally puffed-out knitted fabric consists substantially of polyester.

11. A laminated structure according to claim 9 or 10, **characterised in that** the surface layer is a single or multi-layer material from the group consisting of PVC, polyurethanes, polyolefins, styrene-copolymers or mixtures thereof.

12. A laminated structure according to any one of claims 9 to 11, **characterised in that** the upper side of the surface layer is structure embossed.

13. A laminated structure according to any one of claims 9 to 11, **characterised in that** an embossed paper layer is disposed on the upper side of the surface layer.

## Revendications

1. Procédé de production d'une structure en couches présentant au moins une couche superficielle et une couche inférieure adjacente à celle-ci, souple à la pression, dans lequel on utilise comme couche inférieure souple à la pression, un maillage en fibres synthétiques unilatéralement texturé, **caractérisé en ce que** sur le verso de la couche superficielle, une masse contrecollée est appliquée, dans laquelle le maillage unilatéralement texturé est appliqué avec la face de maillage.

2. Procédé selon la revendication 1, **caractérisé en ce qu'**un maillage unilatéralement texturé, constitué essentiellement de polyester, est utilisé.

3. Procédé selon l'une quelconque des revendications précédentes, **caractérisé en ce que**, pour la couche superficielle, un matériau comprenant une ou plusieurs couches, choisi dans la groupe constitué de PVC, de polyuréthanes, de polyoléfines, de copolymères de styrol ou de leurs mélanges, est utilisé.

4. Procédé selon l'une quelconque des revendications précédentes, **caractérisé en ce que** la face supérieure de la couche superficielle est soumise, éventuellement après l'application d'une laque appropriée, à un gaufrage.

5. Procédé selon la revendication 4, **caractérisé en ce que** le gaufrage est effectué au moyen d'une calandre à chaud.

6. Procédé selon la revendication 4 ou 5, **caractérisé en ce que** la couche superficielle est soumise au gaufrage avant la liaison avec le maillage en fibres synthétiques.

7. Procédé selon l'une quelconque des revendications 4 ou 5, **caractérisé en ce que** la couche superficielle est soumise au gaufrage après la liaison avec le maillage en fibres synthétiques.

8. Procédé selon l'une quelconque des revendications 1 à 3, **caractérisé en ce que** sur la face supérieure de la couche superficielle, à un moment approprié, une décoration produite au moyen d'un support gaufré est appliquée.

9. Structure en couche qui est produite selon un procédé selon l'une quelconque des revendications 1 à 8.

10. Structure en couche selon la revendication 9, **caractérisée en ce que** le maillage unilatéralement texturé est constitué essentiellement de polyester.

11. Structure en couche selon l'une quelconque des revendications 9 à 10, **caractérisée en ce que** la couche superficielle est un matériau à une ou plusieurs couches, constitué de PVC, de polyuréthanes, de polyoléfines, de copolymères de styrol ou de leurs mélanges.

12. Structure en couche selon l'une quelconque des revendications 9 à 11, **caractérisée en ce que** la face supérieure de la couche superficielle est gaufrée.

13. Structure en couche selon l'une quelconque des revendications 9 à 11, **caractérisée en ce que** sur la face supérieure de la couche superficielle, une couche de papier gaufré est appliquée.
